# EUROPÄISCHE PATENTSCHRIFT

(11) **EP 1 791 413 B1**
(45) Veröffentlichungstag und Bekanntmachung des Hinweises auf die Patenterteilung: **26.03.2008**
(21) Anmeldenummer: 06021198.4
(22) Anmeldetag: 10.10.2006
(51) Int. Cl.: H05K 7/20, F03D 9/00, F03D 11/00, F25B 27/00, B01D 5/00

(54) **Schaltschrank mit einem Kühlgerät, der einer Rotation ausgesetzt ist, und Kühlgerät hierfür**
Electrical cabinet with a cooling device, which is submitted to rotation, and cooling device for the cabinet
Armoire électrique avec un dispositif de refroidissement et dispositif de refroidissement pour l'armoire

(30) Priorität: 23.11.2005 DE 202005018434 U; 19.04.2006 DE 202006006326 U
(43) Veröffentlichungstag der Anmeldung: 30.05.2007
(73) Patentinhaber: Pfannenberg GmbH, 21035 Hamburg (DE)
(72) Erfinder: Pfannenberg, Andreas, 21035 Hamburg (DE)
(74) Vertreter: Richter, Werdermann, Gerbaulet & Hofmann

(56) Entgegenhaltungen:
- WO-A-01/77526
- DE-A1- 19 609 687
- US-B1- 6 814 134

## Beschreibung

Die Erfindung betrifft einen Schaltschrank mit einem Kühlgerät, der einer Rotation ausgesetzt ist, und ein Kühlgerät hierfür gemäß den Oberbegriffen der Ansprüche 1 und 9.

In den Turmköpfen von Windkraftanlagen sind ein oder mehrere Schaltschränke mit elektronischen und elektrischen Bau- und Schaltelementen angeordnet, wobei diese Schaltschränke mit Kühlgeräten ausgestattet sind. Die Schaltschränke nehmen an der Rotation der Turbinenwelle teil, so dass auftretendes Kondenswasser im Innenraum des Schaltschrankes verteilt und versprüht wird mit der Folge, dass die feuchtigkeitsanfälligen elektrischen und elektronischen Bauelemente in ihrer Funktion gestört werden können oder zerstört werden.

Aufgabe der vorliegenden Erfindung ist es, die oben aufgeführten Nachteile zu vermeiden.

Zur Lösung der Aufgabe sieht die Erfindung einen Schaltschrank mit den im Anspruch 1 angegebenen Merkmalen vor.

Hiernach ist der Schaltschrank in der Weise ausgebildet, dass im Bereich der im Innenraum des rotierenden Schaltschrankes liegenden kalten Seite des in einer Wand des Schaltschrankes angeordneten Kühlgerätes ein Kondensatring als schalenförmige Auffangwanne für anfallendes Kondenswasser angeordnet ist, deren Innenraum mit einem aus dem Innenraum herausgeführten Schlauch verbunden ist, der im Bereich der außerhalb des Schaltschrankes liegenden warmen Seite des Kühlgerätes spiralförmig ausgebildet ist, wobei der spiralförmig ausgebildete Abschnitt des Schlauches als Spirale mit konstantem Radius oder als sich öffnende Spirale ausgebildet ist und wobei Parallelität der Achsen von Rotorwelle und dem den Kühlkörper umschließenden Kondensatring besteht.

Aufgrund dieser konstruktiven Ausgestaltung ist gewährleistet, dass sich im Schaltschrank ansammelndes Kondenswasser sicher nach außen abgeleitet wird, indem nämlich das Kondensat in dem Kondensatring gesammelt und über den Spiralschlauch nach außen abgeleitet wird, wobei der Kondensatring an der Rotation des Schaltschrankes teilnimmt. Der Kondensatring für das Kondenswasser ist so bemessen, dass eine hohe Aufnahmekapazität gewährleistet ist. Da bei stehendem Rotorblatt die Kühlung weiter arbeitet, kann auch bei diesem Betriebszustand Kondenswasser anfallen, so dass auch dann gewährleistet ist, dass das anfallende Kondenswasser abgeleitet wird. Der das Kondenswasser aus dem Kondensatring ableitende Spiralschlauch ist außerhalb des Schaltschrankes um dem Wärme abgebenden Geräteteil des Kühlgerätes angeordnet, wobei der Schlauch als starre Spirale ausgebildet sein kann. Weist die Spirale des Schlauches einen konstanten Radius auf, dann erfolgt der Abschluss des Kondenswassers durch Schwerkraft, wohingegen bei einer Schlauchausgestaltung mit sich öffnender Spirale die Ableitung des Kondenswassers durch die Fliehkräfte und Schwerkräfte erfolgt. Im letzteren Fall weist der Schlauch eine Spiralenform auf, die in etwa der Spirale einer Uhrfeder entspricht.

Aufgrund dieser erfindungsgemäßen Ausgestaltung ist immer gewährleistet, dass das anfallende Kondenswasser nach außen abgeleitet wird und der Innenraum des Schaltschrankes somit Kondenswasserfrei gehalten wird.

Weitere vorteilhafte Ausgestaltungen der Erfindung sind Gegenstand der Unteransprüche 2 bis 8.

Um zu verhindern, dass in dem Kondensatring befindliches Kondenswasser über den Wannenrand austreten kann, ist der Kondensatring mit einem Überlaufschutz, beispielsweise in Form eines eingezogenen Wannenrandabschnittes, versehen. Der Kondensatring besteht aus Kunststoff oder einem anderen geeigneten Material und weist eine quadratische oder kreisförmige Form auf, wobei auch andere geometrische Formgebungen zum Einsatz kommen können.

Der das Kondenswasser nach außen ableitende Schlauch ist in einer Ebene liegend spiralförmig ausgebildet und um den Wärme abgebenden Geräteteil des Kühlgerätes geführt.

Um die Kondenswasserableitung zu gewährleisten ist die Achse eines vorzugsweise zylindrischen Kühlgerätes beispielsweise parallel zur Achse der Turbinenwelle verlaufend. Der Kondensatring umschließt dabei vorzugsweise konzentrisch den das Kondensat produzierenden kalten Kühlkörper des Kühlgerätes. Die Drehrichtung des Schaltschrankes ist jeweils der Drehrichtung der Turbinenwelle angepasst. Der Kondensatring hat mindestens einen, bevorzugterweise zwei Kondensatschlauchanschlüsse.

Die Erfindung betrifft ferner ein Kühlgerät für einen Schaltschrank, der elektrische und elektronische Bau- und Schaltelemente aufnimmt und der einer Rotation ausgesetzt ist, so wie dies beispielsweise bei Schaltschränken mit Kühlgeräten in Windkraftanlagen der Fall ist. Hiernach ist das Kühlgerät in der Weise ausgebildet, dass diesem mit seiner im Bereich der im Innenraum des Schaltschrankes liegenden kalten Seite des in einer Wand des Schaltschrankes angeordneten Kühlgerätes ein Kondensatring als schalenförmige Auffangwanne für anfallendes Kondenswasser zugeordnet ist, deren Innenraum mit einem aus dem Innenraum des Schaltschrankes herausgeführten Schlauch verbunden ist, der im Bereich der außerhalb des Schaltschrankes liegenden warmen Seite des Kühlgerätes spiralförmig ausgebildet ist, wobei der spiralförmig ausgebildete Abschnitt des Schlauches als Spirale mit konstantem Radius oder als sich öffnende Spirale ausgebildet ist.

Weitere vorteilhafte Ausgestaltungen des Kühlgerätes sind Gegenstand der Unteransprüche.

Bevorzugterweise ist das Kühlgerät als Peltier-Element ausgebildet, jedoch auch andersartig ausgebildete Kühlgeräte können zum Einsatz gelangen.

Der erfindungsgemäß ausgebildete Schaltschrank bzw. Kühlgerät kann überall dort eingesetzt werden, wo der Schaltschrank bzw. das Kühlgerät Rotationen ausgesetzt ist und Kondenswasser anfällt.

Der Erfindung ist anhand von Ausführungsbeispielen in den Zeichnungen darstellt und zwar zeigt:
- Fig. 1: eine schematische Seitenansicht einer Windkraftanlage mit einem Schaltschrank mit einem Kühlgerät,
- Fig. 2: eine Teilansicht in den Innenraum des Turmkopfes der Windkraftanlage mit im Innenraum angeordnetem Schaltschrank,
- Fig. 3: eine Ansicht auf den geöffneten Turmkopf mit im Innenraum angeordnetem Schaltschrank,
- Fig. 4: teils in Ansicht, teils in einem senkrechten Schnitt den Schaltschrank mit dem Kühlgerät und einer Kondenswasserableitung in Form eines Kondensatringes mit der Funktion einer Auffangwanne und einem Spiralschlauch,
- Fig. 5: eine schaubildliche Ansicht des Kühlgerätes mit dem Kondensatring für das Kondenswasser und mit dem Spiralschlauch,
- Fig. 6: die Anordnung gemäß Fig. 5 in einer Ansicht von oben,
- Fig. 7 und 8: schaubildliche Ansichten auf das an einer Schaltschrankwand angebrachte die Schlauchspirale aufnehmendes Gehäuse,

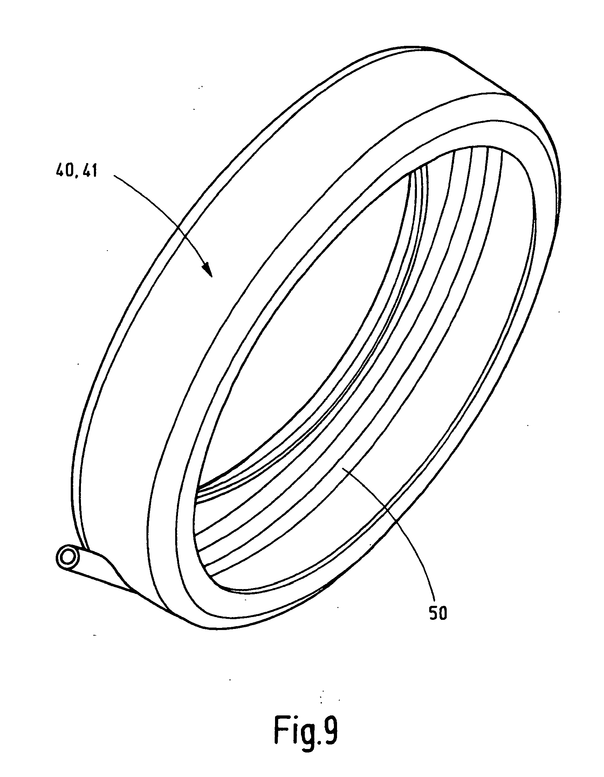

- Fig. 9: eine schaubildliche Ansicht des Kondensatringes,
- Fig. 10: eine schaubildliche Ansicht des Schaltschrankes mit einem Peltier-Element und
- Fig. 11: in einer schematischen Ansicht die Umlaufbewegung des Schaltschrankes und des Kühlgerätes.

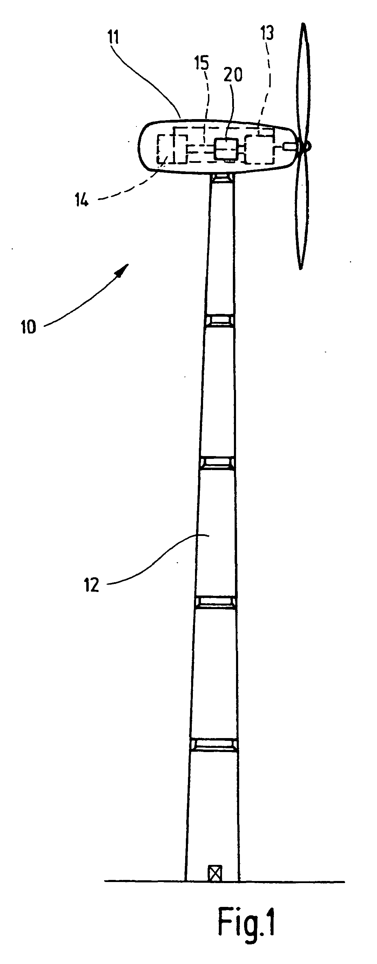

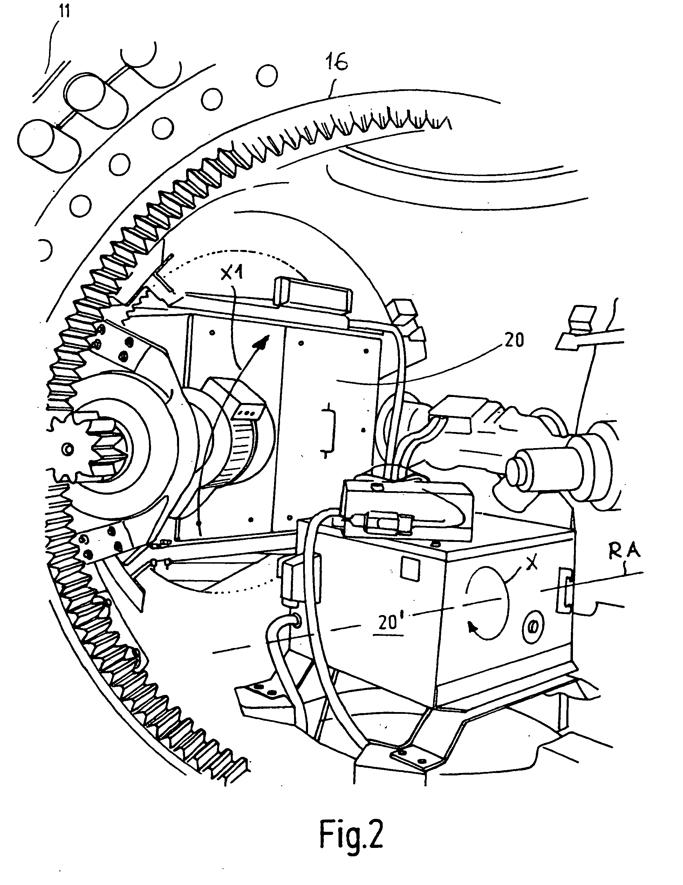

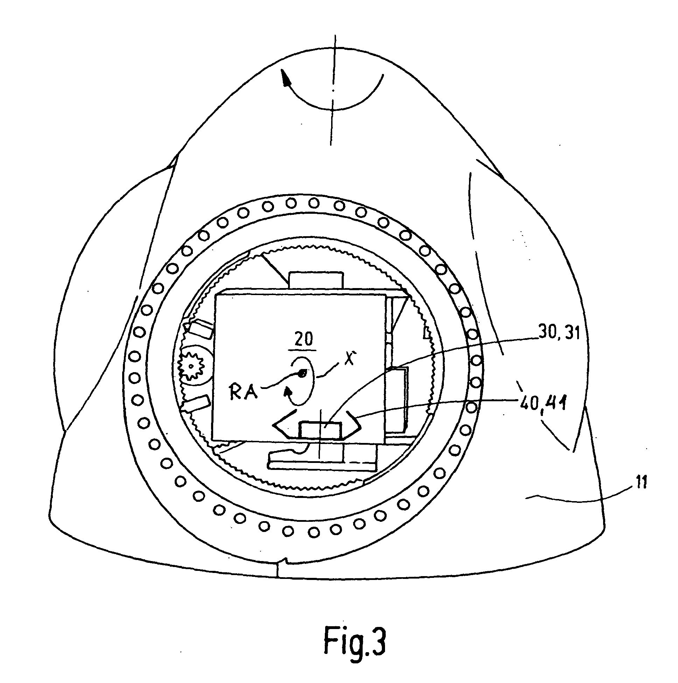

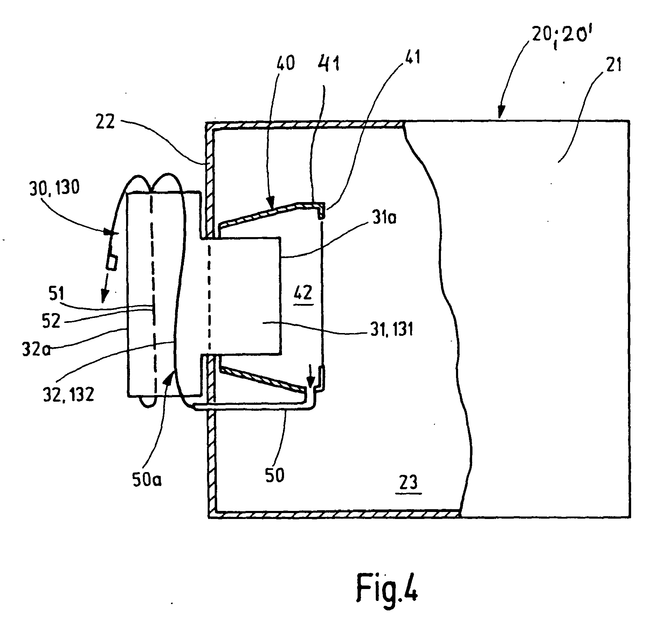

Fig. 1 zeigt eine in an sich bekannter Weise ausgebildete Windkraftanlage 10, die einen säulenartigen Turm 12, einen Turmkopf 11, eine windgetriebene Turbine 13 und einen im Turmkopf angeordneten elektrischen Generator 14 umfasst, wobei die Turbine 13 durch Wind in Rotation versetzt, die Rotationsbewegung über eine Rotorwelle 15 oder ein Getriebe an den elektrischen Generator weitergegeben wird, der die Rotationsenergie in elektrischen Strom umwandelt. In dem im Turmkopf 11 angeordneten Rotationsgehäuse 16 ist ein in an sich bekannter Weise ausgebildeter Schaltschrank 20 angeordnet, der um seine eigene Achse in Pfeilrichtung x rotiert (Fig. 2 und 3). Der Schaltschrank 20 nimmt die elektrischen und elektronischen Bau- und Schaltelemente auf und besteht aus einem Gehäuse 21 mit einem in seinem Innenraum 23 angeordneten Kühlgerät 30, das aus einem Kälte abgebenden Geräteteil 31 besteht, der in dem Innenraum 23 des Schaltschrankgehäuses 21 liegt. Des weiteren umfasst das Kühlgerät 30 einen Wärme abgebenden Geräteteil 32, der außerhalb des Schaltschrankgehäuses 21 liegt (Fig. 4).

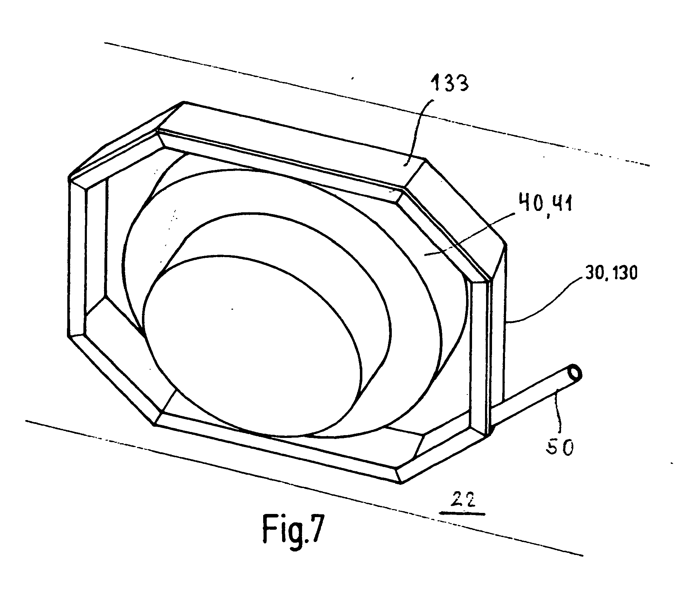

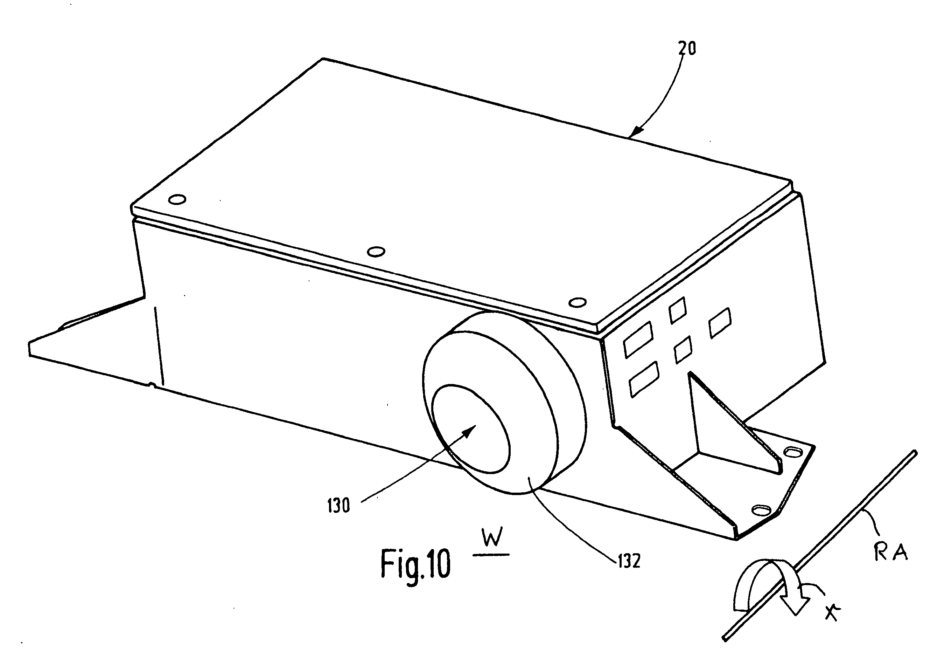

Das Kühlgerät 30 ist bei dem nachfolgend beschriebenen Ausführungsbeispiel als Peltier-Element 130 mit dem Kälte abgebenden Geräteteil 131 und dem Wärme abgebenden Geräteteil 132 ausgebildet. Jedoch auch anders ausgebildete Kühlgeräte können zur Anwendung gelangen. Mit 133 ist das Gehäuse des Peltier-Elementes 130 bezeichnet (Fig. 7 und 10).

Im Bereich des Kälte abgebenden Geräteteils 31 des Kühlgerätes 30 bildet sich Kondenswasser, welches aus dem Innenraum 23 des Gehäuses 21 des Schaltschrankes 20 zu entfernen ist.

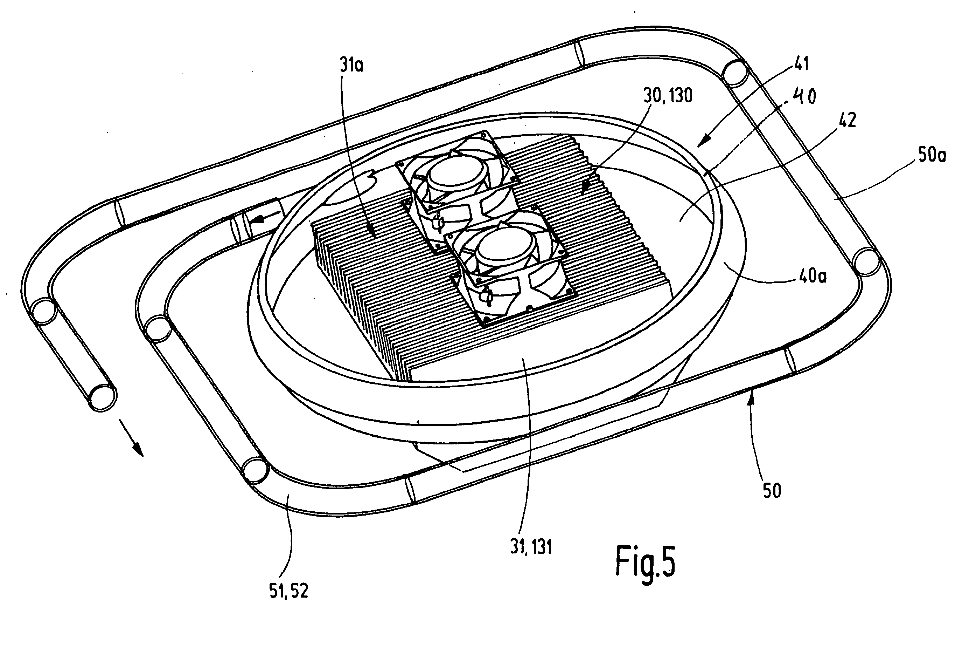

Zur Kondenswasserableitung ist im Bereich der im Innenraum 23 des Schaltschrankes 20 liegenden kalten Seite 31a des in der Wand 22 des Schaltschrankes 20 angeordneten Kühlgerätes 30 eine schalenförmige Auffangwanne 40 für anfallendes Kondenswasser vorgesehen (Fig. 4). Dieser Kondensatring 41 ist mit einem Überlaufschutz, z. B. in Form eines eingezogenen Wannenrandabschnittes 40a, versehen (Fig. 5). Neben einer kreisförmigen Ausgestaltung kann der Kondensatring 41 auch eine andere geometrische Form aufweisen. Der Kondensatring 41 selbst besteht aus einem Kunststoff oder einem anderen geeigneten bevorzugterweise korrosionsbeständigen Material.

Die Anordnung des Kondensatringes 41 im Innenraum 23 des Gehäuses 21 des Schaltschrankes 20 ist derart, dass sich am Kälte abgebenden Geräteteil 31 des Kühlgerätes 30 ansammelndes Kondenswasser dem Kondensatring 41 zugeführt wird.

Zur Ableitung des Kondenswasser aus dem Kondensatring 41 ist dessen Innenraum 42 mit einem Schlauch 50 verbunden, der durch die Wand 22 des Gehäuses 21 des Schaltschrankes 20 nach außen geführt ist.

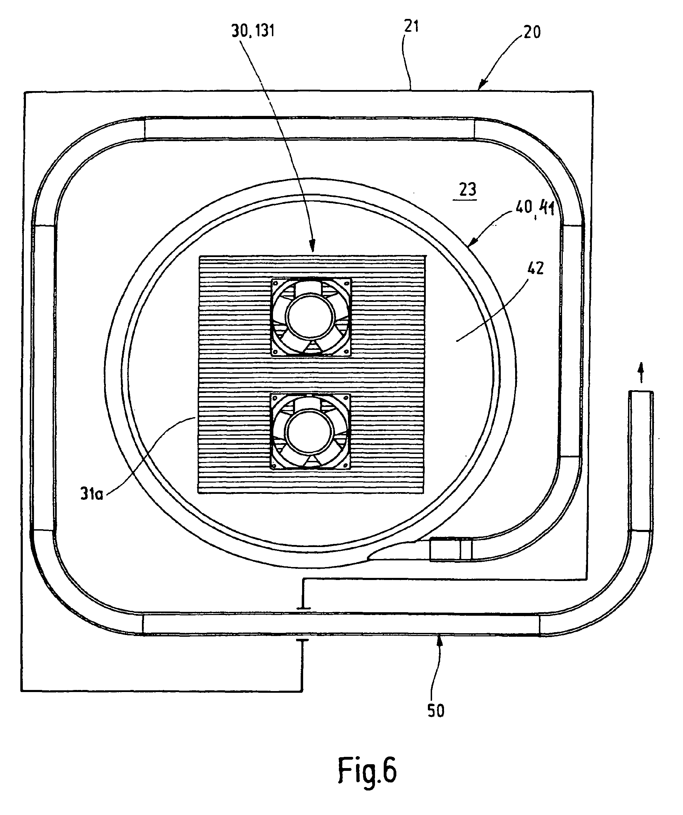

Um in jeder Position des Kühlgerätes 30 das Kondenswasser aus dem Kondensatring 41 nach außen ableiten zu können, ist der Schlauch 50 spiralförmig ausgebildet. Dieser spiralförmige Schlauchabschnitt 50a kann als Spirale 51 mit konstantem Radius oder auch als sich öffnende Spirale 52 ausgebildet sein. Bevorzugterweise umgibt der spiralförmige Schlauchabschnitt 50a des Schlauches 50 den außenliegenden und Wärme abgebenden Geräteteil 32, so dass das dem Schlauch entweichende Kondenswasser durch die warme Umgebungsluft teilweise verdampf (Fig. 4, 5 und 6).

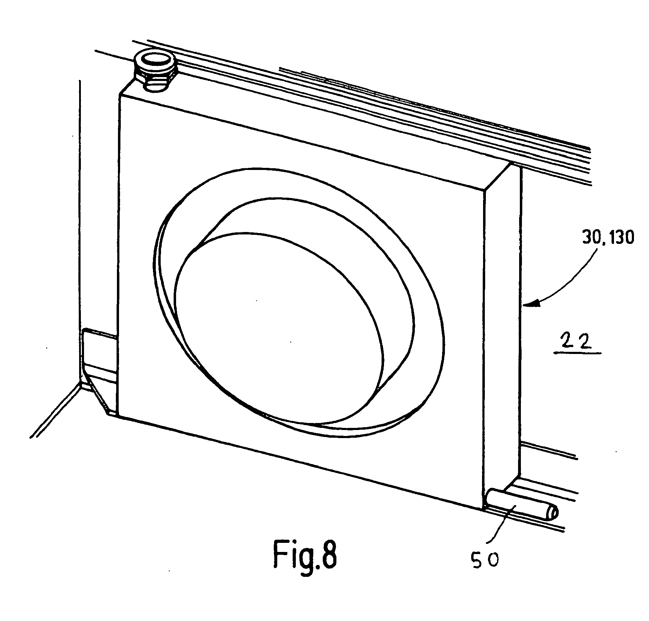

Die Fig. 7 und 8 zeigen schaubildliche Ansichten auf das an der Schaltschrankwand 22 angebrachte und die Schlauchspirale aufnehmenden Gehäuses.

Bei hohen Rotationsgeschwindigkeiten ist die Entleerungsöffnung des Kondensatringes 41 mit der maximalen Entfernung, gemessen von der Rotorachse, anzuordnen. Die Entleerung des Kondensatringes 41 erfolgt durch Fliehkraft radial zur Rotationsachse des Schaltschrankes 20.

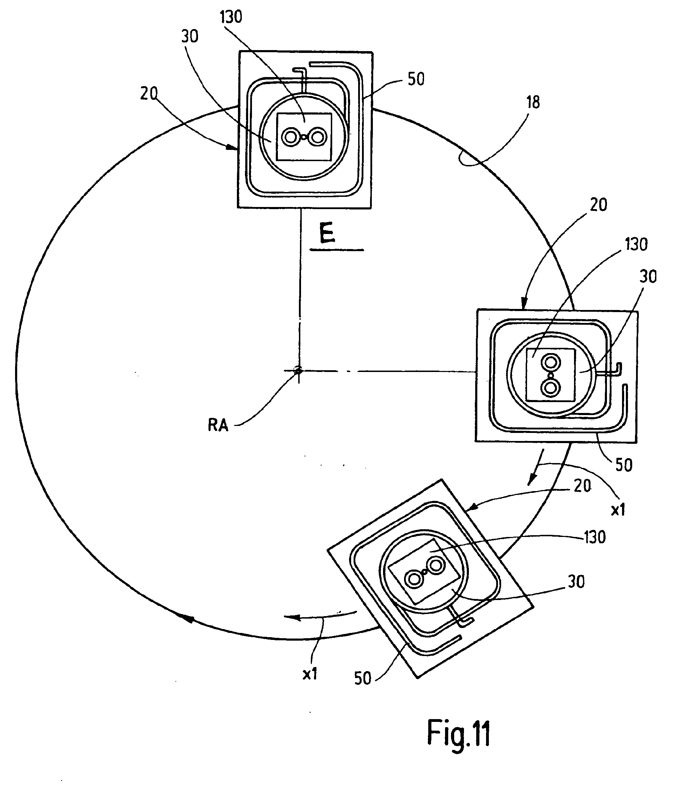

Neben dem sich um die eigene Achse drehenden Schaltschrank 20 kann ein weiterer Schaltschrank 20' vorgesehen sein, wie dies in Fig. 2 dargestellt ist. Dieser Schaltschrank 20' rotiert um die Rotorachse RA in Pfeilrichtung X1 (Fig. 2 und Fig. 11); er rotiert nicht um seine eigene Achse wie der Schaltschrank 20. Auch der Schaltschrank 20' nimmt elektrische und elektronische Bau- und Schaltelemente auf und besteht auch aus einem Gehäuse mit einem in seinem Innenraum angeordneten Kühlgerät 30, mit einem als Peltier-Element 130 mit dem Kälte abgebenden Geräteteil 131 und dem Wärme abgebenden Geräteteil 132.

Des weiteren ist auch der Schaltschrank mit der voranstehend beschriebenen Einrichtung zum Ableiten des Kondenswassers versehen. Bei hohen Drehzahlen erfolgt ein Herausschleudern des Kondenswassers am äußersten Punkt, da sonst ein Anstauen des Kondenswassers möglich ist. Somit erfolgt das Entleeren in der Stellung E. In Fig. 11 ist mit 18 die Wand des rotierenden Zylinders bezeichnet. Bei einer Rotation mit geringer Geschwindigkeit öffnet sich der Schlauch 50 aufgrund seiner spiralförmigen Ausgestaltung für ein Ableiten von angesammeltem Kondenswasser.

### Bezugszeichenliste

- 10: Windkraftanlage
- 11: Turmkopf
- 12: Turm
- 13: Turbine
- 14: Generator
- 15: Rotorwelle
- 16: Rotationsgehäuse
- 18: Zylinderwand

- 20: rotierender Schaltschrank
- 20': Schaltschrank
- 21: Gehäuse
- 22: Wand
- 23: Innenraum

- 30: Kühlgerät
- 130: Peltier-Element
- 131: Kälte abgebendes Geräteteil
- 132: Wärme abgebendes Geräteteil
- 133: Gehäuse
- 31: Kälte abgebendes Geräteteil
- 31 a: kalte Seite
- 32: Wärme abgebendes Geräteteil
- 32a: warme Seite

- 40: Auffangwanne
- 40a: eingezogener Randabschnitt
- 41: Kondensatring
- 42: Innenraum

- 50: Schlauch
- 50a: spiralförmiger Schlauchabschnitt
- 51: Spirale, konstanter Radius
- 52: öffnende Spirale

- RA: Rotorachse
- E: Entleerungsstellung
- W: Warmbereich

## Patentansprüche

1. Schaltschrank zur Aufnahme von elektrischen und elektronischen Bau- und Schaltelementen, der einer Rotation ausgesetzt ist und der mindestens ein Kühlgerät (30) mit einem in seinem Innenraum (23) liegenden Kälte abgebenden Geräteteil (31) und einem außerhalb des Schaltschrankes (20) liegenden Wärme abgebenden Geräteteil (32) aufweist, wobei das Kühlgerät (30) bevorzugterweise als Peltier-Element (130) ausgebildet ist, wobei der Schaltschrank (20) beispielsweise im Turmkopf (11) einer Windkraftanlage (10) angeordnet ist, die aus einem Turm (12), dem Turmkopf (11), einer windgetriebenen Turbine (13) und einem im Turmkopf angeordneten elektrischen Generator (14) besteht, wobei die Turbine (13) durch Wind in Rotation versetzt, die Rotationsbewegung über eine Rotorwelle (15) oder ein Getriebe an den elektrischen Generator weitergegeben wird, der die Rotationsenergie in elektrischen Strom umwandelt,
**dadurch gekennzeichnet,**
**dass** im Bereich der im Innenraum (23) des Schaltschrankes (20) liegenden kalten Seite (31a) des in einer Wand (22) des Schaltschrankes (20) angeordneten Kühlgerätes (30) ein Kondensatring (41) als schalenförmige Auffangwanne (40) für anfallendes Kondenswasser angeordnet ist, deren Innenraum (42) mit einem aus dem Innenraum (23) des Schaltschrankes (20) herausgeführten Schlauch (50) verbunden ist, der im Bereich der außerhalb des Schaltschrankes (20) liegenden warmen Seite (32a) des Kühlgerätes (30) spiralförmig (50a) ausgebildet ist, wobei der spiralförmig ausgebildete Abschnitt (50a) des Schlauches (50) als Spirale (51) mit konstantem Radius oder als sich öffnende Spirale (52) ausgebildet ist, und wobei Parallelität der Achsen von Rotorwelle (15) und dem den Kühlkörper umschließenden Kondensatring (41) besteht.

2. Schaltschrank nach Anspruch 1,
**dadurch gekennzeichnet,**
**dass** der Kondensatring (41) für das Kondenswasser mit einem Überlaufschutz z. B. in Form eines eingezogenen Wannenrandabschnittes (40a) versehen ist.

3. Schaltschrank nach einem der Ansprüche 1 oder 2,
**dadurch gekennzeichnet,**
**dass** der Kondensatring (41) aus Kunststoff oder einem anderen geeigneten Material besteht.

4. Schaltschrank nach einem der Ansprüche 1 bis 3,
**dadurch gekennzeichnet,**
**dass** der Kondensatring (41) eine quadratische oder kreisförmige Form aufweist.

5. Schaltschrank nach einem der Ansprüche 1 bis 4,
**dadurch gekennzeichnet,**
**dass** der Schlauch (50) in einer Ebene liegend spiralförmig (51) ausgebildet und um den Wärme abgebenden Geräteteil (32) des Kühlgerätes (30) geführt ist.

6. Schaltschrank nach einem der Ansprüche 1 bis 4,
**dadurch gekennzeichnet,**
**dass** der Schlauch (50) spiralförmig und sich öffnend ausgebildet und um den Wärme abgebenden Geräteteil (32) des Kühlgerätes (30) geführt ist.

7. Schaltschrank nach einem der Ansprüche 1 bis 6,
**dadurch gekennzeichnet,**
**dass** die Achse des den kühlenden Teil des Kühlgerätes (30) umschließenden Kondensatring (41) parallel zur Achse der Rotorwelle (15) verlaufend ist.

8. Schaltschrank nach einem der Ansprüche 1 bis 7,
**dadurch gekennzeichnet,**
**dass** die Drehrichtung des Schaltschrankes (20) jeweils der Drehrichtung der Rotorwelle (15) angepasst ist.

9. Kühlgerät für einen Schaltschrank (20) zur Aufnahme von elektrischen und elektronischen Bau- und Schaltelementen, der einer Rotation ausgesetzt ist, wobei das Kühlgerät (30) einen im Innenraum (23) des Schaltschrankes (20) liegenden Kälte abgebenden Geräteteil (31) und einen außerhalb des Schaltschrankes liegenden Wärme abgebenden Geräteteil (32) aufweist, wobei das Kühlgerät (30) bevorzugterweise als Peltier-Element (130) ausgebildet ist und wobei der Schaltschrank mit dem Kühlgerät (30) beispielsweise im Turmkopf (11) einer Windkraftanlage (10) angeordnet ist, die aus einem Turm (12), dem Turmkopf (11), einer windgetriebenen Turbine (13) und einem im Turmkopf angeordneten elektrischen Generator (14) besteht, wobei die Turbine (13) durch Wind in Rotation versetzt, die Rotationsbewegung über eine Rotorwelle (15) oder ein Getriebe an den elektrischen Generator weitergegeben wird, der die Rotationsenergie in elektrischen Strom umwandelt,
**dadurch gekennzeichnet,**
**dass** dem Kühlgerät (30) mit seiner im Bereich der im Innenraum (23) des Schaltschrankes (20) liegenden kalten Seite (31 a) des in einer Wand (22) des Schaltschrankes (20) angeordneten Kühlgerätes (30) ein Kondensatring (41) als schalenförmige Auffangwanne (40) für anfallendes Kondenswasser zugeordnet ist, deren Innenraum (42) mit einem aus dem Innenraum (23) herausgeführten Schlauch (50) verbunden ist, der im Bereich der außerhalb des Schaltschrankes (20) liegenden warmen Seite (32a) des Kühlgerätes (30) spiralförmig (50a) ausgebildet ist, wobei der spiralförmig ausgebildete Abschnitt (50a) des Schlauches (50) als Spirale (51) mit konstantem Radius oder als sich öffnende Spirale (52) ausgebildet ist und wobei Parallelität der Achsen von Rotorwelle (15) und dem den Kühlkörper umschließenden Kondensatring (41) besteht.

10. Kühlgerät nach Anspruch 9,
**dadurch gekennzeichnet,**
**dass** der Kondensatring (41) für das Kondenswasser mit einem Überlaufschutz, z. B. in Form eines eingezogenen Wannenrandabschnittes (40a), versehen ist.

11. Kühlgerät nach einem der Ansprüche 9 oder 10,
**dadurch gekennzeichnet,**
**dass** der Kondensatring (41) aus Kunststoff oder einem anderen geeigneten Material besteht.

12. Kühlgerät nach einem der Ansprüche 9 bis 11,
**dadurch gekennzeichnet,**
**dass** der Kondensatring (41) eine quadratische oder kreisförmige Form aufweist.

13. Kühlgerät nach einem der Ansprüche 9 bis 12,
**dadurch gekennzeichnet,**
**dass** der Schlauch (50) in einer Ebene liegend spiralförmig (51) ausgebildet und um den Wärme abgebenden Geräteteil (32) des Kühlgerätes (30) geführt ist.

14. Kühlgerät nach einem der Ansprüche 7 bis 13,
**dadurch gekennzeichnet,**
**dass** der Schlauch (50) spiralförmig und sich öffnend ausgebildet und um den Wärme abgebenden Geräteteil (32) des Kühlgerätes (30) geführt ist.

15. Kühlgerät nach einem der Ansprüche 7 bis 14,
**dadurch gekennzeichnet,**
**dass** die Achse des den kühlenden Teil des Kühlgerätes (30) umschließenden Kondensatring (41) parallel zur Achse der Rotorwelle (15) verlaufend ist.

16. Kühlgerät nach einem der Ansprüche 7 bis 15,
**dadurch gekennzeichnet,**
**dass** die Drehrichtung des Kühlgerätes (30) mit dem Schaltschrank (20) jeweils der Drehrichtung der Rotorwelle (15) angepasst ist.

## Claims

1. Switch cupboard for receiving electrical and electronic components and switching elements which is subject to a rotation and which has at least one cooling device (30) with a cold emitting device part (32) situated in its inner space and with a heat emitting device part (32) situated outside the switch cupboard (20), whereby the cooling device (30) is preferably configured as a Peltier element (130), whereby the switch cupboard (20) is placed for example in the tower head (11) of a wind power installation (10) which consists of a tower (12), the tower head (11), a wind driven turbine (13) and an electrical generator (14) placed in the tower head, whereby the turbine (13) is set into rotation by wind, the rotation movement is transmitted by a rotor shaft (15) or a gear to the electrical motor which transforms the rotation energy into electrical current,
**characterized in**
**that** a condensate ring (41) is placed as a bowl-shaped collecting trough (40) for arising condensate in the area of the cold side (31) situated in the inner space (23) of the switch cupboard (20) of the cooling device (30) placed in a wall (22) of the switch cupboard (20), trough the inner space (42) of which is connected with a hose (50), guided out of the inner space (23) of the switch cupboard (20), which is configured spirally (50a) in the area of the warm side (32a) of the cooling device (30) which is situated outside the switch cupboard (20), whereby the spirally configured section (50a) of the hose (50) is configured as a spiral (51) with a constant radius or as an opening spiral (52) and whereby the axles of the rotor shaft (15) and of the condensate ring (41) surrounding the cooling body are parallel.

2. Switch cupboard according to claim 1,
**characterized in**
**that** the condensate ring (41) for the condensate is provided with an overflow protection, for example of a reduced trough edge section (40a).

3. Switch cupboard according to any of the claims 1 or 2,
**characterized in**
**that** the condensate ring (41) is made of plastics or of another appropriate material.

4. Switch cupboard according to any of the claims 1 to 3,
**characterized in**
**that** the condensate ring (41) has a square or a circular shape.

5. Switch cupboard according to any of the claims 1 to 4,
**characterized in**
**that** the hose (50) is configured as a spiral (51) lying in a plane and is guided around the heat emitting device part (32) of the cooling device (30).

6. Switch cupboard according to any of the claims 1 to 4,
**characterized in**
**that** the hose (50) is configured as a spiral (51) and opening and is guided around the heat emitting device part (32) of the cooling device (30).

7. Switch cupboard according to any of the claims 1 to 6,
**characterized in**
**that** the axle of the condensate ring (41) which surrounds the cooling part of the cooling device (30) is running parallel to the axle of the rotor shaft (15).

8. Switch cupboard according to any of the claims 1 to 7,
**characterized in**
**that** the sense of rotation of the switch cupboard (20) is adapted respectively to the sense of rotation of the rotor shaft (15).

9. Cooling device for a switch cupboard (20) for receiving electrical and electronic components and switching elements which is subject to a rotation, whereby the cooling device (30) has a cold emitting device part (32) situated in the inner space (23) of the switch cupboard (20) and a heat emitting device part (32) situated outside the switch cupboard, whereby the cooling device (30) is preferably configured as a Peltier element (130) and whereby the switch cupboard (20) is placed for example in the tower head (11) of a wind power installation (10) which consists of a tower (12), the tower head (11), a wind driven turbine (13) and an electrical generator (14) placed in the tower head, whereby the turbine (13) is set into rotation by wind, the rotation movement is transmitted by a rotor shaft (15) or a gear to the electrical motor which transforms the rotation energy into electrical current,
**characterized in**
**that** a condensate ring (41) is assigned to the cooling device (30) as a bowl-shaped collecting trough (40) for arising condensate with its cold side (31) situated in the area of the inner space (23) of the switch cupboard (20) of the cooling device (30) placed in a wall (22) of the switch cupboard (20), trough the inner space (42) of which is connected with a hose (50), guided out of the inner space (23) of the switch cupboard (20), which is configured spirally (50a) in the area of the warm side (32a) of the cooling device (30) which is situated outside the switch cupboard (20), whereby the spirally configured section (50a) of the hose (50) is configured as a spiral (51) with a constant radius or as an opening spiral (52) and whereby the axles of the rotor shaft (15) and of the condensate ring (41) surrounding the cooling body are parallel.

10. Cooling device according to claim 9,
**characterized in**
**that** the condensate ring (41) for the condensate is provided with an overflow protection, for example in form of a reduced trough edge section (40a).

11. Cooling device according to any of the claims 9 or 10,
**characterized in**
**that** the condensate ring (41) is made of plastics or of another appropriate material.

12. Cooling device according to any of the claims 9 to 11,
**characterized in**
**that** the condensate ring (41) has a square or a circular shape.

13. Cooling device according to any of the claims 9 to 12,
**characterized in**
**that** the hose (50) is configured as a spiral (51) lying in a plane and is guided around the heat emitting device part (32) of the cooling device (30).

14. Cooling device according to any of the claims 7 to 13,
**characterized in**
**that** the hose (50) is configured spirally and opening and is guided around the heat emitting device part (32) of the cooling device (30).

15. Cooling device according to any of the claims 7 to 14,
**characterized in**
**that** the axle of the condensate ring (41) which surrounds the cooling part of the cooling device (30) is running parallel to the axle of the rotor shaft (15).

16. Cooling device according to any of the claims 7 to 15,
**characterized in**
**that** the sense of rotation of the cooling device (20) with the switch cupboard (20) is adapted respectively to the sense of rotation of the rotor shaft (15).

## Revendications

1. Armoire de commande pour loger des composants et des éléments de commutation électriques et électroniques qui est soumise à une rotation et qui a au moins un appareil de refroidissement (30) avec une partie d'appareil (31) qui émet du froid située dans son espace intérieur et une partie d'appareil (32) qui émet de la chaleur située à l'extérieur de l'armoire de commande (20), l'appareil de refroidissement (30) étant configuré de préférence comme un élément Peltier (130), l'armoire de commande (20) étant placée par exemple dans la tête de tour (11) d'une installation d'éolienne (10) qui comprend une tour (12), la tête de tour (11), une turbine entraînée par le vent (13) et un générateur électrique (14) placé dans la tête de tour, la turbine (13) étant entraînée en rotation par le vent, le mouvement de rotation étant transmis par un arbre de rotor (15) ou un engrenage au générateur électrique qui transforme l'énergie de rotation en courant électrique,
**caractérisée en ce**
**qu'**un anneau de produit de condensation (41) est placé comme bac collecteur en forme d'auge (40) pour l'eau de condensation produite dans la zone du côté froid (31a), situé dans l'espace intérieur (23) de l'armoire de commande (20) de l'appareil de refroidissement (30) placé dans une paroi (22) de l'armoire de commande (20), bac collecteur dont l'espace intérieur (42) est relié à un tuyau flexible (50), qui sort de l'espace intérieur (23) de l'armoire de commande (20), qui est configuré en forme de spirale (50a) dans la zone du côté chaud (32a) de l'appareil de refroidissement (30) qui est situé à l'extérieur de l'armoire de commande (20), la section configurée en forme de spirale (50a) du tuyau (50) étant configurée comme une spirale (51) de rayon constant ou comme une spirale qui s'ouvre (52) et le parallélisme existant entre les axes de l'arbre du rotor (15) et de l'anneau de produit de condensation (41) qui entoure le corps de refroidissement.

2. Armoire de commande selon la revendication 1,
**caractérisée en ce**
**que** l'anneau de produit de condensation (41) pour l'eau de condensation est pourvu d'une protection de trop-plein, par exemple sous forme d'une section marginale rentrée de bac (40a).

3. Armoire de commande selon l'une des revendications 1 ou 2,
**caractérisée en ce**
**que** l'anneau de produit de condensation (41) est en matière synthétique ou en un autre matériau approprié.

4. Armoire de commande selon l'une des revendications 1 à 3,
**caractérisée en ce**
**que** l'anneau de produit de condensation (41) a une forme carrée ou circulaire.

5. Armoire de commande selon l'une des revendications 1 à 4,
**caractérisée en ce**
**que** le tuyau flexible (50) est configuré en forme de spirale (51) située dans un plan et est guidé autour de la partie d'appareil (32) de l'appareil de refroidissement (30) qui émet de la chaleur.

6. Armoire de commande selon l'une des revendications 1 à 4,
**caractérisée en ce**
**que** le tuyau flexible (50) est configuré en forme de spirale et s'ouvrant et est guidé autour de la partie d'appareil (32) de l'appareil de refroidissement (30) qui émet de la chaleur.

7. Armoire de commande selon l'une des revendications 1 à 6,
**caractérisée en ce**
**que** l'axe de l'anneau pour produit de condensation (41) qui entoure la partie refroidissante de l'appareil de refroidissement (30) est parallèle à l'axe de l'arbre du rotor (15).

8. Armoire de commande selon l'une des revendications 1 à 7,
**caractérisée en ce**
**que** le sens de rotation de l'armoire de commande (20) est adapté respectivement au sens de rotation de l'arbre du rotor (15).

9. Appareil de refroidissement pour une armoire de commande (20) pour loger des composants et des éléments de commutation électriques et électroniques qui est soumise à une rotation, l'appareil de refroidissement (30) ayant une partie d'appareil (31) qui émet du froid située dans l'espace intérieur (23) de l'armoire de commande (20) et une partie d'appareil (32) qui émet de la chaleur située à l'extérieur de l'armoire de commande (20), l'appareil de refroidissement (30) étant configuré de préférence comme un élément Peltier (130) et l'armoire de commande (20) étant placée par exemple dans la tête de tour (11) d'une installation d'éolienne (10) qui comprend une tour (12), la tête de tour (11), une turbine entraînée par le vent (13) et un générateur électrique (14) placé dans la tête de tour, la turbine (13) étant entraînée en rotation par le vent, le mouvement de rotation étant transmis par un arbre de rotor (15) ou un engrenage au générateur électrique qui transforme l'énergie de rotation en courant électrique,
**caractérisé en ce**
**qu'**un anneau de produit de condensation (41) est assigné à l'appareil de refroidissement (30) comme bac collecteur en forme d'auge (40) pour l'eau de condensation produite avec son côté froid (31 a), situé dans la zone de l'espace intérieur (23) de l'armoire de commande (20) de l'appareil de refroidissement (30) placé dans une paroi (22) de l'armoire de commande (20), bac collecteur dont l'espace intérieur (42) est relié à un tuyau flexible (50), qui sort de l'espace intérieur (23) de l'armoire de commande (20), qui est configuré en forme de spirale (50a) dans la zone du côté chaud (32a) de l'appareil de refroidissement (30) qui est situé à l'extérieur de l'armoire de commande (20), la section configurée en forme de spirale (50a) du tuyau (50) étant configurée comme une spirale (51) de rayon constant ou comme une spirale qui s'ouvre (52) et le parallélisme existant entre les axes de l'arbre du rotor (15) et de l'anneau de produit de condensation (41) qui entoure le corps de refroidissement.

10. Appareil de refroidissement selon la revendication 9,
**caractérisé en ce**
**que** l'anneau de produit de condensation (41) pour l'eau de condensation est pourvu d'une protection de trop-plein, par exemple sous forme d'une section marginale rentrée de bac (40a).

11. Appareil de refroidissement selon l'une des revendications 9 ou 10,
**caractérisé en ce**
**que** l'anneau de produit de condensation (41) est en matière synthétique ou en un autre matériau approprié.

12. Appareil de refroidissement selon l'une des revendications 9 à 11,
**caractérisé en ce**
**que** l'anneau de produit de condensation (41) a une forme carrée ou circulaire.

13. Appareil de refroidissement selon l'une des revendications 9 à 12,
**caractérisé en ce**
**que** le tuyau flexible (50) est configuré en forme de spirale (51) située dans un plan et est guidé autour de la partie d'appareil (32) de l'appareil de refroidissement (30) qui émet de la chaleur.

14. Appareil de refroidissement selon l'une des revendications 7 à 13,
**caractérisé en ce**
**que** le tuyau flexible (50) est configuré en forme de spirale et s'ouvrant et est guidé autour de la partie d'appareil (32) de l'appareil de refroidissement (30) qui émet de la chaleur.

15. Appareil de refroidissement selon l'une des revendications 7 à 14,
**caractérisé en ce**
**que** l'axe de l'anneau pour produit de condensation (41) qui entoure la partie refroidissante de l'appareil de refroidissement (30) est parallèle à l'axe de l'arbre du rotor (15).

16. Appareil de refroidissement selon l'une des revendications 7 à 15,
**caractérisé en ce**
**que** le sens de rotation de l'appareil de refroidissement (30) avec l'armoire de commande (20) est adapté respectivement au sens de rotation de l'arbre du rotor (15).
